# EUROPEAN PATENT APPLICATION

(11) **EP 4 799 857 A1**
(43) Date of publication of application: **02.09.2026**
(21) Application number: 25193090.5
(22) Date of filing: 31.07.2025
(51) Int. Cl.: B60L 58/12, B60K 35/10, B60K 35/22, B60K 35/28

(54) **METHOD AND APPARATUS FOR DISPLAYING ENERGY CONSUMPTION, VEHICLE, STORAGE MEDIUM, AND PRODUCT**

(30) Priority: 26.02.2025 CN 202510220819
(71) Applicant: Xiaomi EV Technology Co., Ltd., Beijing 100176 (CN)
(72) Inventor: CHEN, Bao, Beijing, 100176 (CN); LI, Hongfei, Beijing, 100176 (CN); GAO, Fei, Beijing, 100176 (CN); LI, Xinpei, Beijing, 100176 (CN); YU, Hualong, Beijing, 100176 (CN)
(74) Representative: Stöckeler, Ferdinand

(57) **Abstract**

A method and apparatus for displaying energy consumption, a vehicle, a storage medium, and a product are provided, which relates to the technical field of vehicles. The method includes: determining (103; 303; 603) first energy consumption information based on a total power consumption and an individual power consumption of each type of an electrical device of a vehicle within a target period, where the first energy consumption information includes at least one of: a mileage of the vehicle within the target period, a first ratio of each individual power consumption to the total power consumption, a vehicle range corresponding to each individual power consumption, a vehicle range corresponding to the total power consumption, a ratio of the total power consumption to the mileage, or a product of the ratio and a preset number of kilometers; and displaying (104; 306; 607) the first energy consumption information.

## Description

### TECHNICAL FIELD

The present invention relates to the technical field of vehicles, and, in particular, to a method and apparatus for displaying energy consumption, a vehicle, a storage medium, and a product.

### BACKGROUND OF THE INVENTION

The range performance of new energy vehicles is the issue users care about most, and thus energy consumption details of the vehicles draw attention from the users.

### SUMMARY OF THE INVENTION

To overcome the problems in the related art, the present invention provides a method and apparatus for displaying energy consumption, a vehicle, a storage medium, and a product. The invention is set out in the appended set of claims.

According to a first aspect of embodiments of the present invention, a method for displaying energy consumption is provided. The method includes:
receiving a request for displaying the energy consumption, where the request for displaying the energy consumption includes a target period;
determining a total power consumption of a vehicle and an individual power consumption of each type of an electrical device of the vehicle within the target period;
determining first energy consumption information to be displayed, based on the total power consumption and the individual power consumption, where the first energy consumption information includes at least one of: a mileage of the vehicle within the target period, a first ratio of the individual power consumption of each type of the electrical device to the total power consumption, a vehicle range corresponding to each individual power consumption, a vehicle range corresponding to the total power consumption, a ratio of the total power consumption to the mileage, or a product of the ratio and a preset number of kilometers; and
displaying the first energy consumption information on a display panel.

Optionally, the method further includes:
determining a second reference power consumption corresponding to each type of the electrical device within the target period, according to a first reference power consumption corresponding to each type of the electrical device within a unit duration;
determining second energy consumption information to be displayed based on the second reference power consumption corresponding to each type of the electrical device and the individual power consumption, where the second energy consumption information includes at least one of: a reference range corresponding to each second reference power consumption, or a magnitude relationship between the vehicle range corresponding to the individual power consumption of each type of the electrical device and the reference range; and
displaying the second energy consumption information on the display panel.

Optionally, before determining the second reference power consumption corresponding to each type of the electrical device within the target period according to the first reference power consumption corresponding to each type of the electrical device within the unit duration, the method further includes:
obtaining current environmental data of the vehicle; and
determining the first reference power consumption corresponding to each type of the electrical device within the unit duration based on the environmental data.

Optionally, the method further includes:
displaying a first control on the display panel in a case where a vehicle range corresponding to the individual power consumption of at least one type of the electrical device is greater than the reference range; and
displaying an optimal control strategy corresponding to the at least one electrical device on the display panel in a case where the first control is selected;
optionally, the method further includes:
   displaying a second control corresponding to each optimal control strategy on the display panel; and
   performing, in a case where a second control is selected, optimal control on an associated electrical device based on an optimal control strategy associated with the second control;
   optionally, the method further includes:
      displaying a third control corresponding to each optimal control strategy on the display panel; and
      displaying, in a case where a third control is selected, an optimization operation interface corresponding to an optimal control strategy associated with the third control.

Optionally, the method further includes:
displaying, in a case where the vehicle includes a plurality of electrical devices of the same type, a fourth control corresponding to the same type on the display panel;
determining a first power consumption corresponding to each electrical device among the plurality of electrical devices of the same type in a case where the fourth control is selected;
determining third energy consumption information to be displayed based on the total power consumption and the first power consumption, where the third energy consumption information includes at least one of: a vehicle range corresponding to each first power consumption, or a second ratio of each first power consumption to the total power consumption; and
displaying the third energy consumption information on the display panel.

Optionally, the method further includes:
determining an altitude change value corresponding to the vehicle within each sub-period in the target period;
determining a second power consumption of the vehicle within the target period according to the altitude change value corresponding to each sub-period;
determining fourth energy consumption information to be displayed based on the total power consumption and the second power consumption, where the fourth energy consumption information includes at least one of: a vehicle range corresponding to the second power consumption, or a third ratio of each second power consumption to the total power consumption; and
displaying the fourth energy consumption information on the display panel.

Optionally, the target period is a period with a specific moment as a start moment or a period corresponding to a start moment to an end moment of a single trip.

According to a second aspect of the embodiments of the present invention, an apparatus for displaying energy consumption is provided. The apparatus includes:
a reception module configured to receive a request for displaying the energy consumption, where the request for displaying the energy consumption includes a target period;
a first determination module configured to determine a total power consumption of a vehicle and an individual power consumption of each type of an electrical device of the vehicle within the target period;
a second determination module configured to determine first energy consumption information to be displayed based on the total power consumption and the individual power consumption, where the first energy consumption information includes at least one of: a mileage of the vehicle within the target period, a first ratio of the individual power consumption of each type of the electrical device to the total power consumption, a vehicle range corresponding to each individual power consumption, a vehicle range corresponding to the total power consumption, a ratio of the total power consumption to the mileage, or a product of the ratio and a preset number of kilometers; and
a display module configured to display the first energy consumption information on a display panel.

Optionally, the apparatus for displaying energy consumption further includes a first processing module configured to:
determine a second reference power consumption corresponding to each type of the electrical device within the target period, according to a first reference power consumption corresponding to each type of the electrical device within a unit duration;
determine second energy consumption information to be displayed based on the second reference power consumption corresponding to each type of the electrical device and the individual power consumption, where the second energy consumption information includes at least one of: a reference range corresponding to each second reference power consumption, or a magnitude relationship between the vehicle range corresponding to the individual power consumption of each type of the electrical device and the reference range; and
display the second energy consumption information on the display panel.

Optionally, the first processing module further configured to:
obtain current environmental data of the vehicle; and
determine the first reference power consumption corresponding to each type of the electrical device within the unit duration based on the environmental data.

Optionally, the display module further configured to:
display a first control on the display panel in a case where a vehicle range corresponding to the individual power consumption of at least one type of the electrical device is greater than the reference range; and
display an optimal control strategy corresponding to the at least one electrical device on the display panel in a case where the first control is selected;
optionally, the apparatus for displaying energy consumption further includes a control module configured to:
   display a second control corresponding to each optimal control strategy on the display panel; and
   perform, in a case where a second control is selected, optimal control on an associated electrical device based on an optimal control strategy associated with the second control;
   optionally, the display module further configured to:
      display a third control corresponding to each optimal control strategy on the display panel; and
      display, in a case where a third control is selected, an optimization operation interface corresponding to an optimal control strategy associated with the third control.

Optionally, the apparatus for displaying energy consumption further includes a second processing module configured to:
display, in a case where the vehicle includes a plurality of electrical devices of the same type, a fourth control corresponding to the same type on the display panel;
determine a first power consumption corresponding to each electrical device among the plurality of electrical devices of the same type in a case where the fourth control is selected;
determine third energy consumption information to be displayed based on the total power consumption and the first power consumption, where the third energy consumption information includes at least one of: a vehicle range corresponding to each first power consumption, or a second ratio of each first power consumption to the total power consumption; and
display the third energy consumption information on the display panel.

According to a third aspect of the embodiments of the present invention, a vehicle is provided. The vehicle includes:
one or more processors; and
a memory configured to store processor-executable instructions;
where the one or more processors are collectively configured to implement steps of the method for displaying energy consumption according to the embodiment of the first aspect of the present invention.

According to a fourth aspect of the embodiments of the present invention, a non-transitory computer-readable storage medium is provided. The computer-readable storage medium stores a computer program, where the computer program, when executed by one or more processors of a processing device, causes the processing device to implement the method for displaying energy consumption according to the embodiment of the first aspect of the present invention.

According to a fifth aspect of the embodiments of the present invention, a computer program product is provided. The computer program product includes a computer program, where the computer program, when executed by one or more processors of a processing device, causes the processing device to implement the method for displaying energy consumption according to the embodiment of the first aspect of the present invention.

The technical solution according to the embodiments of the present invention may include the following beneficial effects:
In the embodiments of the present invention, the request for displaying the energy consumption is received, and the request for displaying the energy consumption includes the target period. The total power consumption of the vehicle and the individual power consumption of each type of the electrical device of the vehicle within the target period are determined. Then, the first energy consumption information to be displayed is determined based on the total power consumption and the individual power consumption. The first energy consumption information includes at least one of the following: the mileage of the vehicle within the target period, the first ratio of the individual power consumption of each type of the electrical device to the total power consumption, the vehicle range corresponding to each individual power consumption, the vehicle range corresponding to the total power consumption, the ratio of the total power consumption to the mileage, or the product of the ratio and the preset number of kilometers. Finally, the first energy consumption information is displayed on the display panel. In this way, a relationship between the individual power consumption of each electrical device and the total power consumption, the range corresponding to the individual power consumption corresponding to each device, and the range, an actual mileage, and an average energy consumption that correspond to the total power consumption may be displayed on the display panel, such that energy consumption details of the vehicle may be clearly, intuitively and exactly displayed to a user.

It should be understood that the foregoing general description and the following detailed description are merely illustrative and explanatory, and cannot limit the present invention.

### BRIEF DESCRIPTION OF DRAWINGS

The drawings here are incorporated into the description as a constituent part of the description, illustrate embodiments conforming to the present invention, and serve to explain principles of the present invention along with the description.
FIG. 1 is a schematic flowchart of a method for displaying energy consumption according to some embodiments of the present invention;
FIG. 2 is a schematic diagram of a display interface according to an embodiment of the present invention;
FIG. 3 is a schematic flowchart of a method for displaying energy consumption according to some embodiments of the present invention;
FIG. 4 is a schematic diagram of a display interface according to an embodiment of the present invention;
FIG. 5 is a schematic diagram of a display interface according to an embodiment of the present invention;
FIG. 6 is a flowchart of a method for displaying energy consumption according to some embodiments of the present invention;
FIG. 7 is a schematic diagram of a display interface according to an embodiment of the present invention;
FIG. 8 is a schematic diagram of a display interface according to an embodiment of the present invention;
FIG. 9 is a schematic structural diagram of an apparatus for displaying energy consumption according to some embodiments of the present invention;
FIG. 10 is a schematic functional block diagram of a vehicle according to an embodiment of the present invention; and
FIG. 11 is a schematic structural diagram of a chip according to an embodiment of the present invention.

### DETAILED DESCRIPTION OF THE INVENTION

Some embodiments of the present invention will be described in detail here, and their examples are shown in the accompanying drawings. When the following description involves the accompanying drawings, the same numerals in different accompanying drawings indicate the same or similar elements unless otherwise indicated. Various alterations, modifications, and equivalents of a method, an apparatus, and/or a system described here will become apparent after understanding of the present invention. For example, orders of operations described here are merely illustrative. The operations are not limited to these orders set forth here, but may be changed in a way of becoming apparent after understanding of the present invention, except for operations that should be performed in specific order. In addition, in order to improve clarity and conciseness, descriptions of features known in the art may be omitted.

Implementations described in some embodiments of the present invention below do not represent all implementations consistent with the present invention. On the contrary, these implementations are merely examples of apparatuses and methods consistent with some aspects of the present invention as detailed in the appended claims.

How exactly the energy consumption details of the vehicles are displayed to the users has become a pressing technical problem.

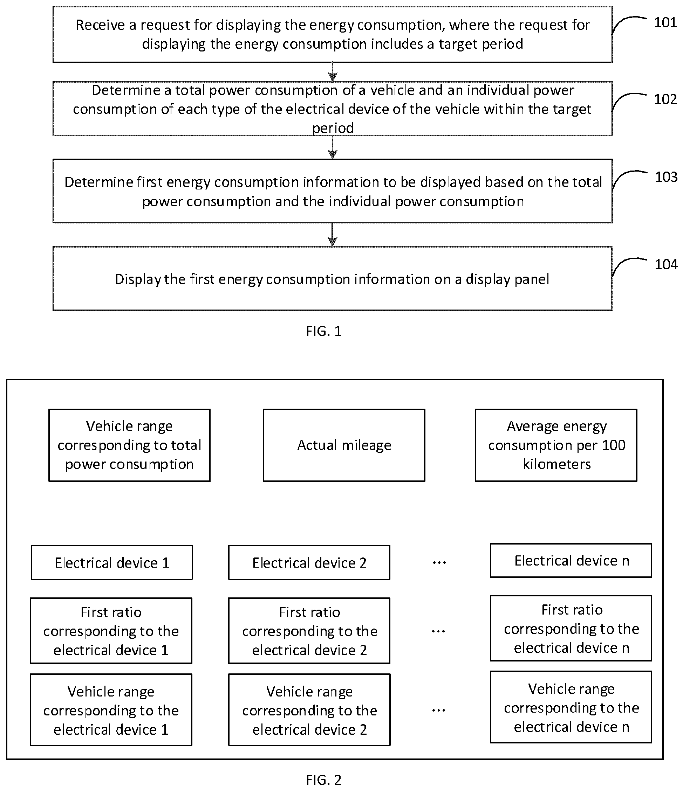

FIG. 1 is a flowchart of a method for displaying energy consumption according to some embodiments of the present invention. As shown in FIG. 1, the method includes the following steps 101 to 104.

In step 101: a request for displaying the energy consumption is received. The request for displaying the energy consumption includes a target period.

The request for displaying the energy consumption may be triggered by a user by touching the display panel, or may be triggered by the user through voice instructions, which is not limited to the present invention.

In some embodiments, the target period is a period with a specific moment as a start moment or a period corresponding to a start moment to an end moment of a single trip. The specific moment may be a preset or predetermined moment.

The specific moment may be an end moment of last charging, or may be any moment in the single trip, or may be a start moment of parking mode after the trip ends.

In some embodiments, the target period may be a period from the specific moment to a current moment, or may be a period from the specific moment to any historical moment, which is not limited to the present invention.

In step 102: a total power consumption of a vehicle and an individual power consumption of each type of the electrical device of the vehicle within the target period are determined.

In some embodiments, a first remaining battery corresponding to the vehicle at the start moment of the target period and a second remaining battery corresponding to the end moment of the target period may be determined at first. Then, it is determined that a difference between the first remaining battery and the second remaining battery is the total power consumption of the vehicle within the target period.

In some embodiments, the individual power consumption of each type of the electrical device may be determined according to a voltage and a current of each type of the electrical device during use.

In some embodiments, the target period may be divided into a plurality of sub-periods. Power consumption corresponding to the electrical device within each sub-period is determined based on a voltage and a current that correspond to the electrical device in each sub-period. Then, the power consumption corresponding to each sub-period is added together to obtain the individual power consumption of the electrical device within the target period.

In some embodiments, the individual power consumption of each type of the electrical device may also be added together to obtain the total power consumption of the vehicle within the target period.

In some embodiments, each type of the electrical device may include: smart driving, an air conditioner, a light, a driving device, an external electrical device (for example, charging a mobile phone), etc., which is not limited to the present invention.

In step 103: first energy consumption information to be displayed is determined based on the total power consumption and the individual power consumption.

The first energy consumption information includes at least one of the following: a mileage of the vehicle within the target period, a first ratio of the individual power consumption of each type of the electrical device to the total power consumption, a vehicle range corresponding to each individual power consumption, a vehicle range corresponding to the total power consumption, a ratio of the total power consumption to the mileage, or a product of the ratio and a preset number of kilometers.

In some embodiments, a mapping relationship between power consumption and a range may be determined according to a preset working condition. Then, the vehicle range corresponding to the individual power consumption and the vehicle range corresponding to the total power consumption may be determined according to the mapping relationship.

In some embodiments, the preset working conditions may be a light-duty vehicle test cycle (CLTC) or other set working condition, which is not limited to the present invention.

The ratio of the total power consumption to the mileage may represent an average energy consumption per kilometer.

In some embodiments, the preset number of kilometers may be 100 kilometers, 10 kilometers, or 50 kilometers, etc., which is not limited to the present invention. In a case where the preset number of kilometers are 100 kilometers, the product of the ratio and the preset number of kilometers may represent the average energy consumption per 100 kilometers.

In step 104: the first energy consumption information is displayed on a display panel.

FIG. 2 is a schematic diagram of a display interface according to an embodiment of the present invention. As shown in FIG. 2, a first ratio corresponding to each type of the electrical device, a vehicle range corresponding to an individual power consumption, a vehicle range corresponding to a total power consumption of a vehicle, an actual mileage of the vehicle within a target period, and an average energy consumption per 100 kilometers may be displayed on a display panel.

Thus, first energy consumption information is displayed on the display panel, and energy consumption details of the vehicle may be clearly and intuitively displayed to a user.

In the embodiments of the present invention, the request for displaying the energy consumption is received, and the request for displaying the energy consumption includes the target period. The total power consumption of the vehicle and the individual power consumption of each type of the electrical device of the vehicle within the target period are determined. Then, the first energy consumption information to be displayed is determined based on the total power consumption and the individual power consumption. The first energy consumption information includes at least one of the following: the mileage of the vehicle within the target period, the first ratio of the individual power consumption of each type of the electrical device to the total power consumption, the vehicle range corresponding to each individual power consumption, the vehicle range corresponding to the total power consumption, the ratio of the total power consumption to the mileage, or the product of the ratio and the preset number of kilometers. Finally, the first energy consumption information is displayed on the display panel. In this way, a relationship between the individual power consumption of each electrical device and the total power consumption, the range corresponding to the individual power consumption corresponding to each device, and the range, an actual mileage, and an average energy consumption that correspond to the total power consumption may be displayed on the display panel, such that energy consumption details of the vehicle may be clearly, intuitively and exactly displayed to a user.

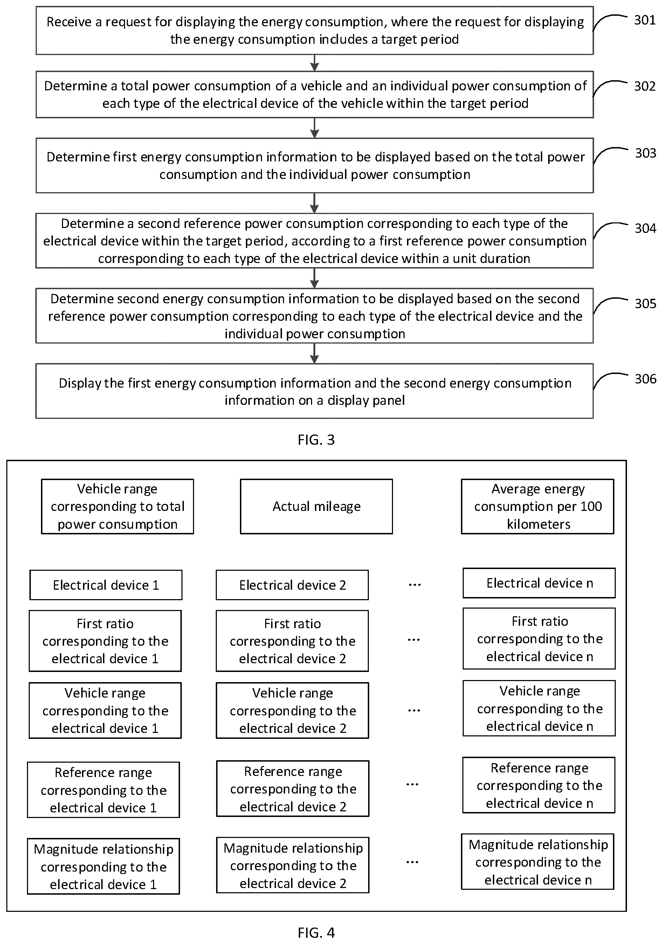

FIG. 3 is a flowchart of a method for displaying energy consumption according to some embodiments of the present invention. As shown in FIG. 3, the method includes the following steps 301 to 306.

In step 301: a request for displaying the energy consumption is received. The request for displaying the energy consumption includes a target period.

In step 302: a total power consumption of a vehicle and an individual power consumption of each type of the electrical device of the vehicle within the target period are determined.

In step 303: first energy consumption information to be displayed is determined based on the total power consumption and the individual power consumption.

The first energy consumption information includes at least one of the following: a mileage of the vehicle within the target period, a first ratio of the individual power consumption of each type of the electrical device to the total power consumption, a vehicle range corresponding to each individual power consumption, a vehicle range corresponding to the total power consumption, a ratio of the total power consumption to the mileage, or a product of the ratio and a preset number of kilometers.

Reference may be made to detailed descriptions in other embodiments in the present invention for specific implementation forms of step 301 to step 303, which will not be specifically repeated here.

In step 304: a second reference power consumption corresponding to each type of the electrical device within the target period is determined according to a first reference power consumption corresponding to each type of the electrical device within a unit duration.

The first reference power consumption may be power consumption within the unit duration of the electrical device in an ideal working state. The unit duration may be 1 hour, 1 minute, etc., which is not limited to the present invention.

In some embodiments, current environmental data of the vehicle are obtained. The first reference power consumption corresponding to each type of the electrical device within the unit duration is determined based on the environmental data.

The environmental data may include a temperature, a humidity, weather, etc., which is not limited to the present invention.

Different electrical devices exhibit different power consumption in different environments. For example, power consumption of an air conditioner varies at a high temperature and a low temperature. Thus, according to the environmental data, the first reference power consumption of the electrical device within the unit duration may be determined.

In this embodiment of the present invention, after the first reference power consumption corresponding to the electrical device within the unit duration and the target period are determined, the ratio of duration of the target period to the unit duration may be determined. Then, a product of the first reference power consumption and the ratio may be determined as the second reference power consumption corresponding to the electrical device within the target period.

In step 305: second energy consumption information to be displayed is determined based on the second reference power consumption corresponding to each type of the electrical device and the individual power consumption.

The second energy consumption information includes at least one of the following: a reference range corresponding to each second reference power consumption, or a magnitude relationship between the vehicle range corresponding to each type of the electrical device and the reference range.

In some embodiments, the reference range corresponding to the second reference power consumption may be determined according to a mapping relationship between power consumption and a range.

In some embodiments, the magnitude relationship between the vehicle range corresponding to the electrical device and the reference range may be that the vehicle range is greater than the reference range, or the vehicle range is equal to a reference range, or the vehicle range is less than the reference range, or indicate a difference between the vehicle range and the reference range, which is not limited to the present invention.

In step 306: the first energy consumption information and the second energy consumption information are displayed on a display panel.

In some embodiments, the first energy consumption information and the second energy consumption information may be simultaneously displayed on the display panel.

FIG. 4 is a schematic diagram of a display interface according to an embodiment of the present invention. As shown in FIG. 4, a first ratio corresponding to each type of the electrical device, a vehicle range corresponding to an individual power consumption, a vehicle range corresponding to a total power consumption of a vehicle, a mileage of the vehicle within a target period, a reference range corresponding to each type of the electrical device, a magnitude relationship between the vehicle range corresponding to each type of the electrical device and the reference range, and an average energy consumption per 100 kilometers may be displayed on a display panel.

In this embodiment of the present invention, first energy consumption information may be displayed to a user, and second energy consumption information may be further displayed to the user. Thus, energy consumption details of the vehicle may be clearly, intuitively and exactly displayed to the user, the user may be further clearly and intuitively informed of an electrical device whose power consumption exceeds a normal value, and the user may be reminded to optimize the power consumption of the electrical device.

In some embodiments, a first control is displayed on the display panel in a case where a vehicle range corresponding to at least one type of electrical device is greater than the reference range. An optimal control strategy corresponding to the at least one electrical device is displayed on the display panel in a case where the first control is selected.

It should be noted that a case where the vehicle range corresponding to the electrical device is greater than the reference range indicates that the power consumption of the electrical device within the target period is greater than the reference power consumption, and too much power is used. Thus, the optimal control strategy may be provided for the user to reduce power consumption of a user device.

For example, when an air conditioner is used in summer, the power consumption of the air conditioner within the target period is higher than the reference power consumption. The optimal control strategy may be configured to increase a temperature of the air conditioner and reduce the power consumption of the air conditioner while ensuring comfort of the user.

In some embodiments, the user may select the first control by touching the first control on the display panel, or may select the first control through voice, which is not limited to the present invention.

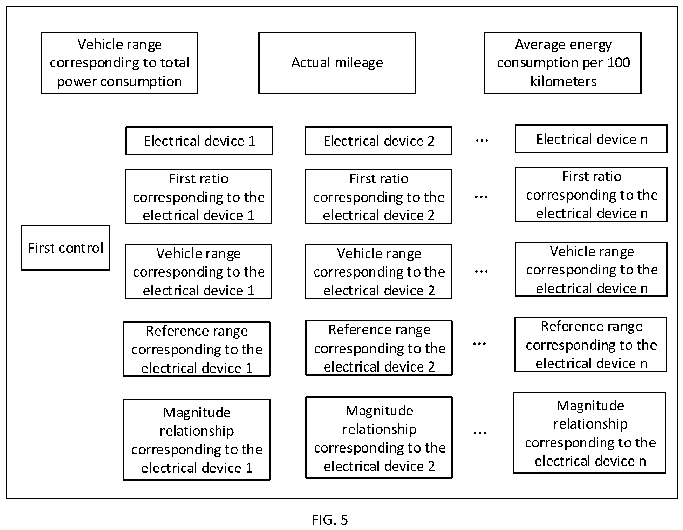

FIG. 5 is a schematic diagram of a display interface according to an embodiment of the present invention. As shown in FIG. 5, a first ratio corresponding to each type of the electrical device, a vehicle range corresponding to an individual power consumption, a vehicle range corresponding to a total power consumption of a vehicle, a mileage of the vehicle within a target period, a reference range corresponding to each type of the electrical device, a magnitude relationship between the vehicle range corresponding to each type of the electrical device and the reference range, and a first control may be displayed on a display panel.

In some embodiments, an optimal control strategy may be displayed in a form of a floating window on an upper layer of a current interface. The optimal control strategy may also be displayed on a new display interface through display interface jumping, which is not limited to the present invention.

In some embodiments, a second control corresponding to each optimal control strategy is displayed on the display panel. In a case where a second control is selected, optimal control is performed on an associated electrical device based on an optimal control strategy associated with the second control. Thus, after the optimal control strategy is selected, the vehicle may autonomously perform optimal control on the electrical device, the user does not need to perform the optimal control on the vehicle according to the optimal control strategy, and operation convenience is improved accordingly.

In some embodiments, the user may select the second control by touching the second control on the display panel, or may select the second control through voice, which is not limited to the present invention.

In some embodiments, a third control corresponding to each optimal control strategy is displayed on the display panel. In a case where a third control is selected, an optimization operation interface according to the optimal control strategy associated with the third control may be displayed. Thus, after the third control corresponding to the optimal control strategy is selected, the optimization operation interface of the optimal control strategy may be displayed, and the user may perform an optimal control operation through the optimization operation interface.

In some embodiments, the user may select the third control by touching the third control on the display panel, or may select the third control through voice, which is not limited to the present invention.

For example, the electrical device is an electrical device related to a sentry mode, and a corresponding optimal control strategy is that "a common place is set, automatic close at the common place is opened, and the power consumption may be reduced". The displayed optimization operation interface may be a sentry setting interface in a case where the corresponding third control is selected.

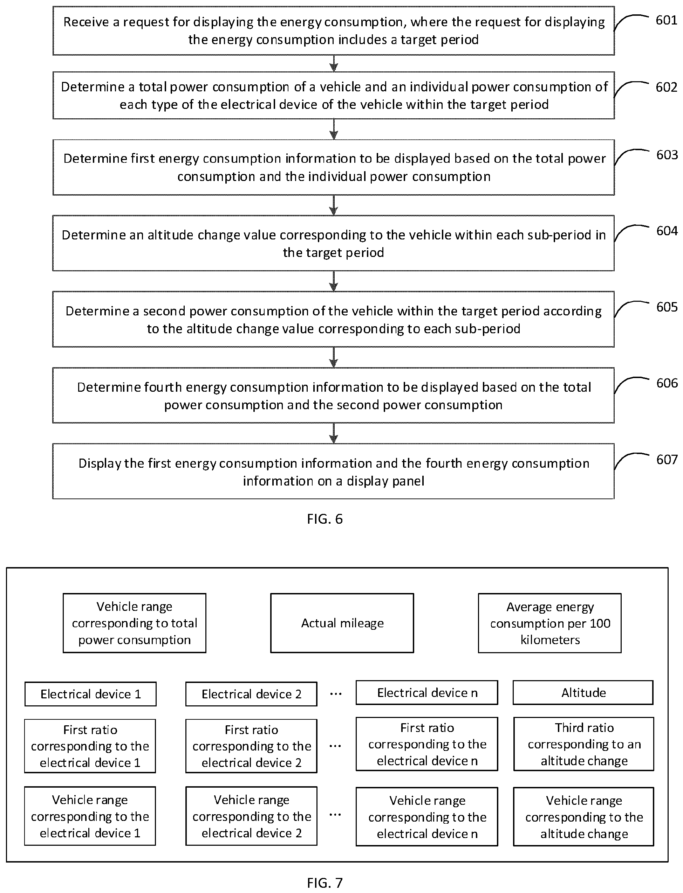

FIG. 6 is a flowchart of a method for displaying energy consumption according to some embodiments of the present invention. As shown in FIG. 6, the method includes the following steps 601 to 607.

In step 601: a request for displaying the energy consumption is received. The request for displaying the energy consumption includes a target period.

In step 602: a total power consumption of a vehicle and an individual power consumption of each type of the electrical device of the vehicle within the target period are determined.

In step 603: first energy consumption information to be displayed is determined based on the total power consumption and the individual power consumption.

The first energy consumption information includes at least one of the following: a mileage of the vehicle within the target period, a first ratio of the individual power consumption of each type of the electrical device to the total power consumption, a vehicle range corresponding to each individual power consumption, or a vehicle range corresponding to the total power consumption.

Reference may be made to detailed descriptions in other embodiments in the present invention for specific implementation forms of step 601 to step 603, which will not be repeated here.

In step 604: an altitude change value corresponding to the vehicle within each sub-period in the target period is determined.

In some embodiments, in a case where the vehicle receives a positioning signal, a quality of the positioning signal is determined. In a case where the quality of the positioning signal is greater than or equal to a quality threshold, the altitude change value of the vehicle is determined according to the positioning signal. In a case where the quality of the positioning signal is greater than or equal to the quality threshold, the altitude change value of the vehicle is determined according to a pitch angle and a traveled distance of the vehicle.

In step 605: a second power consumption of the vehicle within the target period is determined according to the altitude change value corresponding to each sub-period.

In some embodiments, according to the altitude change value corresponding to the vehicle within each sub-period, as well as a weight and gravity acceleration of the vehicle, a gravitational potential energy change corresponding to the vehicle within each sub-period is determined. Then, the gravitational potential energy change is converted into sub-power consumption corresponding to each sub-period, and sub-power consumption corresponding to each sub-period is added to obtain the second power consumption of the vehicle within the target period.

In step 606: fourth energy consumption information to be displayed is determined based on the total power consumption and the second power consumption.

The fourth energy consumption information includes at least one of the following: a vehicle range corresponding to the second power consumption, or a third ratio of each second power consumption to the total power consumption.

In some embodiments, the vehicle range corresponding to the second power consumption may be determined according to a mapping relationship between power consumption and a range.

In step 607: the first energy consumption information and the fourth energy consumption information are displayed on a display panel.

In some embodiments, the first energy consumption information and the fourth energy consumption information may be simultaneously displayed on the display panel.

FIG. 7 is a schematic diagram of a display interface according to an embodiment of the present invention. As shown in FIG. 7, a first ratio corresponding to each type of the electrical device, a vehicle range corresponding to an individual power consumption, a vehicle range corresponding to a second power consumption consumed by an altitude change, and a third ratio of each second power consumption to a total power consumption may be displayed on a display panel.

In this embodiment of the present invention, first energy consumption information may be displayed to a user, and the second power consumption consumed by the altitude change of a vehicle and a relationship between the second power consumption and the total power consumption may be further displayed to the user. Thus, energy consumption details of the vehicle may be displayed to the user more exactly and accurately.

In some embodiments, in a case where the vehicle includes a plurality of electrical devices of the same type, a fourth control corresponding to the same type may be further displayed on the display panel. It is determined that the vehicle includes the plurality of electrical devices of the same type in a case where the fourth control is selected. Third energy consumption information to be displayed is determined based on the total power consumption and a first power consumption. The third energy consumption information includes at least one of the following: a vehicle range corresponding to each first power consumption, or a second ratio of each first power consumption to the total power consumption. The third energy consumption information is displayed on the display panel.

For example, a plurality of lighting lamps are provided in the vehicle. Then, in a case where a fourth control corresponding to the lamps is selected, the vehicle range corresponding to the first power consumption corresponding to each lamp and the second ratio of the first power consumption corresponding to each lamp to the total power consumption are displayed on the display panel.

In some embodiments, the third energy consumption information may be displayed in a form of a floating window on an upper layer of a current interface. The third energy consumption information may also be displayed on a new display interface through display interface jumping, which is not limited to the present invention.

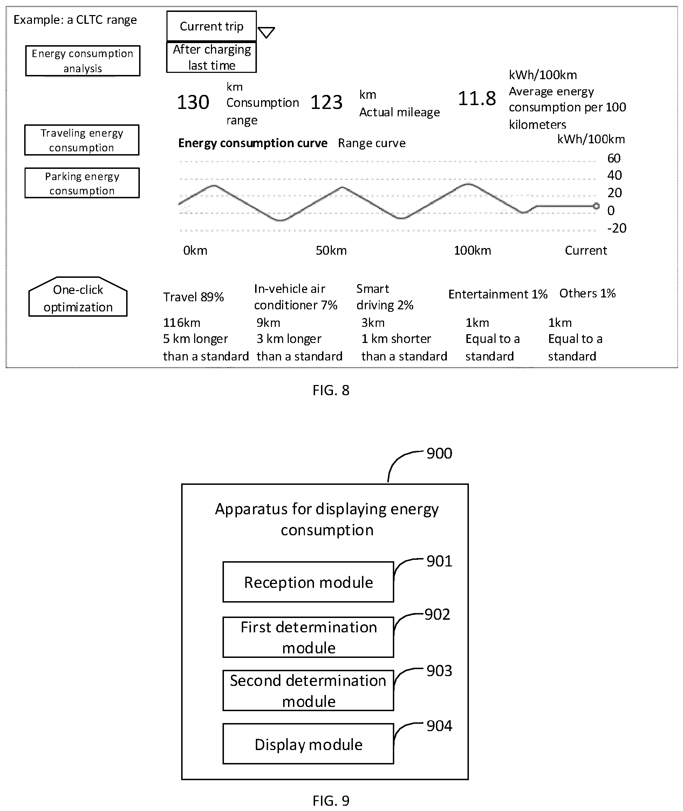

FIG. 8 is a schematic diagram of a display interface according to an embodiment of the present invention. As shown in FIG. 8, a current working condition is a CLTC working condition, a target period is this trip, a vehicle range corresponding to a total power consumption is 130 kilometers (km), an actual mileage is 123 km, and a first control (such as a one-click optimization control shown in FIG. 8) are displayed. A first ratio corresponding to an electrical device (driving device) for traveling is 89%, and a corresponding range is 116 km, and is 5 km longer than a standard. It may be understood that a vehicle range corresponding to the electrical device for traveling is 5 km longer than a corresponding reference range. A first ratio corresponding to an air conditioner is 7%, and a corresponding range is 9 km, and is 3 km more than the standard. It may be understood that a vehicle range corresponding to the air conditioner is 3 km longer than a corresponding reference range. A first ratio of smart driving is 2%, and a corresponding range is 3 km, and is 1 km shorter than the standard. It may be understood that a vehicle range corresponding to the smart driving is 1 km shorter than a corresponding reference range. A first ratio corresponding to entertainment is 1%, and a corresponding range is 1 km, and is equal to the standard. It may be understood that a vehicle range corresponding to the entertainment is equal to a corresponding reference mileage. A first ratio corresponding to other electrical device is 1%, and a corresponding range is 1 km, and is equal to the standard. It may be understood that a vehicle range corresponding to the other electrical device is equal to a corresponding reference range.

In some embodiments, an energy consumption curve as shown in FIG. 8 may also be displayed on a display panel.

In some embodiments, a range curve may also be displayed on the display panel by touching a range curve control as shown in FIG. 8.

In some embodiments, an average energy consumption per 100 kilometers may also be displayed on the display panel. As shown in FIG. 8, the average energy consumption per hundred kilometers is 11.8 kilowatt-hour/hundred kilometers (kWh/100 km).

In some embodiments, whether to display traveling energy consumption of the vehicle or parking energy consumption of the vehicle may be selected. As shown in FIG. 8, the traveling energy consumption of the vehicle is displayed.

In order to implement the embodiments described above, the present invention further provides an apparatus for displaying energy consumption.

FIG. 9 is a block diagram of the apparatus for displaying energy consumption according to some embodiments of the present invention. With reference to FIG. 9, the apparatus 900 includes:
a reception module 901 configured to receive a request for displaying the energy consumption, where the request for displaying the energy consumption includes a target period;
a first determination module 902 configured to determine a total power consumption of a vehicle and an individual power consumption of each type of the electrical device of the vehicle within the target period;
a second determination module 903 configured to determine first energy consumption information to be displayed based on the total power consumption and the individual power consumption, where the first energy consumption information includes at least one of the following: a mileage of the vehicle within the target period, a first ratio of the individual power consumption of each type of the electrical device to the total power consumption, a vehicle range corresponding to each individual power consumption, a vehicle range corresponding to the total power consumption, a ratio of the total power consumption to the mileage, or a product of the ratio and a preset number of kilometers; and
a display module 904 configured to display the first energy consumption information on a display panel.

In some embodiments, the apparatus for displaying energy consumption 900 further includes a first processing module configured to:
determine a second reference power consumption corresponding to each type of the electrical device within the target period, according to a first reference power consumption corresponding to each type of the electrical device within a unit duration;
determine second energy consumption information to be displayed based on the second reference power consumption corresponding to each type of the electrical device and the individual power consumption, where the second energy consumption information includes at least one of the following: a reference range corresponding to each second reference power consumption, or a magnitude relationship between the vehicle range corresponding to each type of the electrical device and the reference range; and
display the second energy consumption information on the display panel.

In some embodiments, the first processing module is configured to:
obtain current environmental data of the vehicle; and
determine the first reference power consumption corresponding to each type of the electrical device within the unit duration based on the environmental data.

In some embodiments, the display module 904 is configured to:
display a first control on the display panel in a case where a vehicle range corresponding to at least one type of electrical device is greater than the reference range; and
display an optimal control strategy corresponding to the at least one electrical device on the display panel in a case where the first control is selected.

In some embodiments, the apparatus for displaying energy consumption 900 further includes a control module configured to:
display a second control corresponding to each optimal control strategy on the display panel; and
perform, in a case where a second control is selected, optimal control on an associated electrical device based on an optimal control strategy associated with the second control.

In some embodiments, the display module 904 is configured to:
display a third control corresponding to each optimal control strategy on the display panel; and
display, in a case where a third control is selected, an optimization operation interface corresponding to an optimal control strategy associated with the third control.

In some embodiments, the apparatus for displaying energy consumption 900 further includes a second processing module configured to:
display, in a case where the vehicle includes a plurality of electrical devices of the same type, a fourth control corresponding to the same type on the display panel;
determine a first power consumption corresponding to each electrical device among the plurality of electrical devices of the same type in a case where the fourth control is selected;
determine third energy consumption information to be displayed based on the total power consumption and the first power consumption, where the third energy consumption information includes at least one of the following: a vehicle range corresponding to each first power consumption, or a second ratio of each first power consumption to the total power consumption; and
display the third energy consumption information on the display panel.

In some embodiments, the apparatus for displaying energy consumption 900 further includes a third processing module configured to:
determine an altitude change value corresponding to the vehicle within each sub-period in the target period;
determine a second power consumption of the vehicle within the target period according to the altitude change value corresponding to each sub-period;
determine fourth energy consumption information to be displayed based on the total power consumption and the second power consumption, where the fourth energy consumption information includes at least one of the following: a vehicle range corresponding to the second power consumption, or a third ratio of each second power consumption to the total power consumption; and
display the fourth energy consumption information on the display panel.

In some embodiments, the target period is a period with a specific moment as a start moment or a period corresponding to a start moment to an end moment of a single trip.

With respect to the apparatus in the embodiments described above, specific methods by which the modules perform operations have been described in detail in the embodiments relating to the method, and will not be described in detail here.

According to the apparatus for displaying energy consumption of the embodiments of the present invention, the request for displaying the energy consumption is received, and the request for displaying the energy consumption includes the target period. The total power consumption of the vehicle and the individual power consumption of each type of the electrical device of the vehicle within the target period are determined. Then, the first energy consumption information to be displayed is determined based on the total power consumption and the individual power consumption. The first energy consumption information includes at least one of the following: the mileage of the vehicle within the target period, the first ratio of the individual power consumption of each type of the electrical device to the total power consumption, the vehicle range corresponding to each individual power consumption, the vehicle range corresponding to the total power consumption, the ratio of the total power consumption to the mileage, or the product of the ratio and the preset number of kilometers. Finally, the first energy consumption information is displayed on the display panel. In this way, a relationship between the individual power consumption of each electrical device and the total power consumption, the range corresponding to the individual power consumption corresponding to each device, and the range, an actual mileage, and an average energy consumption that correspond to the total power consumption may be displayed on the display panel, such that energy consumption details of the vehicle may be clearly, intuitively and exactly displayed to a user.

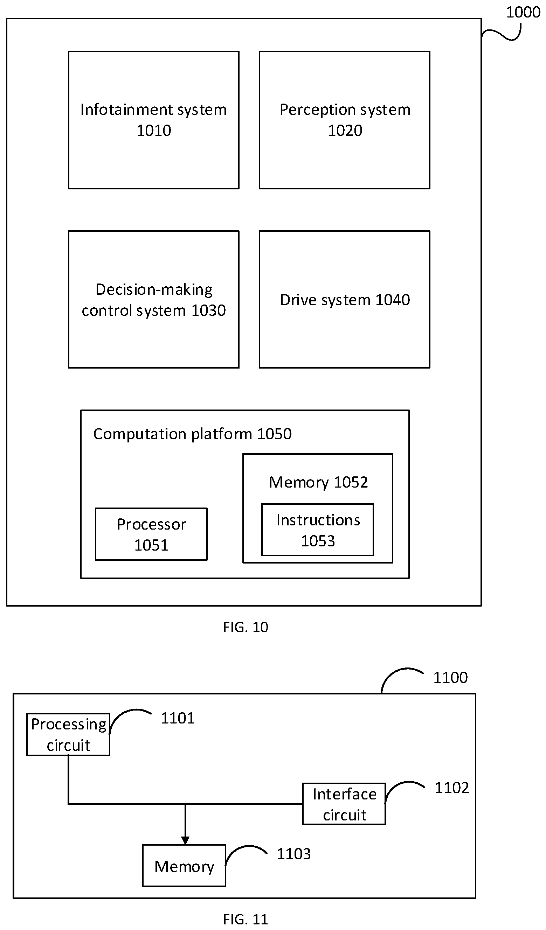

FIG. 10 is a block diagram of a vehicle 1000 according to an example. For example, the vehicle 1000 may be a hybrid vehicle, a non-hybrid vehicle, an electric vehicle, a fuel cell vehicle, or other type of vehicles. The vehicle 1000 may be an autonomous vehicle, a semi-autonomous vehicle, or a non-autonomous vehicle.

With reference to FIG. 10, the vehicle 1000 may include various subsystems, such as an infotainment system 1010, a perception system 1020, a decision-making control system 1030, a drive system 1040, and a computation platform 1050. The vehicle 1000 may further include more or fewer subsystems, and each subsystem may include a plurality of components. In addition, the subsystems and components of the vehicle 1000 may be interconnected by a wired or wireless method.

In some embodiments, the infotainment system 1010 may include a communication system, an entertainment system, a navigation system, etc. The perception system 1020 may include several sensors that sense information about environment around the vehicle 1000. For example, the perception system 1020 may include a global positioning system (which may be a global positioning system (GPS), a BeiDou system, or another positioning system), an inertial measurement unit (IMU), a laser radar, a millimeter-wave radar, an ultrasonic radar, and a camera device.

The decision-making control system 1030 may include a computation system, a vehicle controller, a steering system, a throttle, and a brake system. The drive system 1040 may include components that provide power movement for the vehicle 1000. In an embodiment, the drive system 1040 may include an engine, an energy source, a transmission system, and wheels. The engine may be one or a combination of an internal combustion engine, an electric motor, and an air compression engine. The engine converts energy provided by the energy source into mechanical energy.

Some or all functions of the vehicle 1000 are controlled by the computation platform 1050. The computation platform 1050 may include at least one processor 1051 and a memory 1052, and the processor 1051 may execute instructions 1053 stored in the memory 1052.

The processor 1051 may be any conventional processor, such as a commercially available CPU. The processor may further include a graphic process unit (GPU), a field programmable gate array (FPGA), a system on chip (SOC), an application specific integrated circuit (ASIC) or their combinations.

The memory 1052 may be implemented by any type of volatile or non-volatile storage devices or their combinations, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, and an optical disk.

In addition to the instructions 1053, the memory 1052 may also store data, such as road maps, route information, vehicle positions, directions, and speeds. The data stored in the memory 1052 may be used by the computation platform 1050. In these embodiments of the present invention, the processor 1051 may execute the instructions 1053 so as to complete all or some of steps of the method for displaying energy consumption described above.

The present invention further provides a non-transitory computer-readable storage medium. The computer-readable storage medium stores computer program instructions, where the program instructions, when executed by one or more processors of a processing device, cause the processing device to implement steps of the method for displaying energy consumption according to the present invention.

In order to implement the embodiments described above, the present invention further provides a computer program product. The computer program product includes a computer program, where the computer program, when executed by one or more processors of a processing device, causes the processing device to implement the method for displaying energy consumption according to the forgoing embodiments of the present invention.

FIG. 11 is a schematic structural diagram of a chip according to an embodiment of the present invention. Reference may be made to the schematic structural diagram of the chip 1100 shown in FIG. 11, but is not limited to this.

The chip 1100 includes a processing circuit 1101. The processing circuit 1101 is configured to perform any of the methods described above. The processing circuit 1101 may be a processing device.

In some embodiments, the chip 1100 further includes one or more interface circuits 1102. Optionally, the interface circuit 1102 is connected to a memory 1103. The interface circuit 1102 may be configured to receive a signal from the memory 1103 or another apparatus, and the interface circuit 1102 may be configured to transmit the signal to the memory 1103 or another apparatus. For example, the interface circuit 1102 may read instructions stored in the memory 1103 and send the instructions to the processing circuit 1101.

In some embodiments, the interface circuit 1102 performs at least one of the communication steps such as transmission or reception in the method described above, or the processing circuit 1101 performs other steps.

In some embodiments, the terms such as the interface circuit, the interface, a transceiver pin, and a transceiver may be used interchangeably.

In some embodiments, the chip 1100 further includes one or more memories 1103 configured to store the instructions. Optionally, all or some of the memories 1103 may be outside the chip 1100.

As used herein, the term processor may refer to one processor that performs the defined functions or a plurality of processors that collectively perform defined functions, so that the execution of the individual defined functions may be divided amongst such processors.

The collection, storage, use, processing, transmission, provision, invention, etc. of user personal information involved in the present invention comply with relevant laws and regulations, and do not violate public order and good customs.

In addition, the word "illustrative" used here serves as an example, an instance, or an illustrative diagram. Any aspect or design described here as "illustrative" here is not necessarily to be understood as advantageous over other aspects or designs. On the contrary, the use of the word "illustrative" is intended to present concepts in a specific way. As used here, the terms "or" and "alternative" are intended to indicate inclusive "or" and inclusive "alternative" rather than exclusive "or" and exclusive "alternative". That is, unless otherwise specified or clearly indicated from the context, "X applies A or B" is intended to indicate any arrangement of natural inclusive arrangements. That is, if X applies A, X applies B, or X applies both A and B, "X applies A or B" satisfies any instance of the foregoing instances. In addition, the articles "a" and "an" as used in the present invention and the appended claims are generally understood as "one or more" unless otherwise specified or the singular form clearly indicated from the context.

Similarly, although the present invention has been shown and described with respect to one or more implementations, equivalent variations and modifications are readily conceived by those skilled in the art after reading and understanding the description and the accompanying drawings. All such modifications and variations are included in the present invention and are limited by the scope of the claims merely. With regard to functions performed by the components (for example, elements and resources) described above particularly, the terms used to describe such components are intended to correspond to any component (functionally equivalent) that performs the specified functions of the component described, even if the structure is not equivalent to the structure disclosed, unless otherwise indicated. In addition, although a particular feature of the present invention may have been disclosed with respect to merely one implementation of several implementations, such a feature may be combined with one or more other features of other implementations as expectable and advantageous to any given or specific application. In addition, for the terms "include," "have," "provide," "with" or their variations used in the detailed description or the claims, the terms are intended to be inclusive in a manner similar to that of the term "comprise".

It should be understood that the present invention is not limited to precise structures described above and shown in the accompanying drawings, and various modifications and changes may be made without departing from the scope of the present invention. The scope of the present invention is merely limited by the appended claims.

## Claims

1. A method for displaying energy consumption, comprising:
receiving (101; 301; 601) a request for displaying the energy consumption, wherein the request for displaying the energy consumption comprises a target period;
determining (102; 302; 602) a total power consumption of a vehicle and an individual power consumption of each type of an electrical device of the vehicle within the target period;
determining (103; 303; 603) first energy consumption information to be displayed, based on the total power consumption and the individual power consumption, wherein the first energy consumption information comprises at least one of: a mileage of the vehicle within the target period, a first ratio of the individual power consumption of each type of the electrical device to the total power consumption, a vehicle range corresponding to each individual power consumption, a vehicle range corresponding to the total power consumption, a ratio of the total power consumption to the mileage, or a product of the ratio and a preset number of kilometers; and
displaying (104; 306; 607) the first energy consumption information on a display panel.

2. The method according to claim 1, further comprising:
determining (304) a second reference power consumption corresponding to each type of the electrical device within the target period, according to a first reference power consumption corresponding to each type of the electrical device within a unit duration;
determining (305) second energy consumption information to be displayed based on the second reference power consumption corresponding to each type of the electrical device and the individual power consumption, wherein the second energy consumption information comprises at least one of: a reference range corresponding to each second reference power consumption, or a magnitude relationship between the vehicle range corresponding to the individual power consumption of each type of the electrical device and the reference range; and
displaying (306) the second energy consumption information on the display panel.

3. The method according to claim 2, wherein, before determining (304) the second reference power consumption corresponding to each type of the electrical device within the target period according to the first reference power consumption corresponding to each type of the electrical device within the unit duration, the method further comprises:
obtaining current environmental data of the vehicle; and
determining the first reference power consumption corresponding to each type of the electrical device within the unit duration based on the environmental data.

4. The method according to claim 2, further comprising:
displaying a first control on the display panel in a case where a vehicle range corresponding to the individual power consumption of at least one type of the electrical device is greater than the reference range; and
displaying an optimal control strategy corresponding to the at least one electrical device on the display panel in a case where the first control is selected;
optionally, the method further comprises:
displaying a second control corresponding to each optimal control strategy on the display panel; and
performing, in a case where a second control is selected, optimal control on an associated electrical device based on an optimal control strategy associated with the second control;
optionally, the method further comprises:
displaying a third control corresponding to each optimal control strategy on the display panel; and
displaying, in a case where a third control is selected, an optimization operation interface corresponding to an optimal control strategy associated with the third control.

5. The method according to any one of claims 1 to 4, further comprising:
displaying, in a case where the vehicle comprises a plurality of electrical devices of the same type, a fourth control corresponding to the same type on the display panel;
determining a first power consumption corresponding to each electrical device among the plurality of electrical devices of the same type in a case where the fourth control is selected;
determining third energy consumption information to be displayed based on the total power consumption and the first power consumption, wherein the third energy consumption information comprises at least one of: a vehicle range corresponding to each first power consumption, or a second ratio of each first power consumption to the total power consumption; and
displaying the third energy consumption information on the display panel.

6. The method according to any one of claims 1 to 5, further comprising:
determining (604) an altitude change value corresponding to the vehicle within each sub-period in the target period;
determining (605) a second power consumption of the vehicle within the target period according to the altitude change value corresponding to each sub-period;
determining (606) fourth energy consumption information to be displayed based on the total power consumption and the second power consumption, wherein the fourth energy consumption information comprises at least one of: a vehicle range corresponding to the second power consumption, or a third ratio of each second power consumption to the total power consumption; and
displaying (607) the fourth energy consumption information on the display panel.

7. The method according to any one of claims 1 to 6, wherein the target period is a period with a specific moment as a start moment or a period corresponding to a start moment to an end moment of a single trip.

8. An apparatus for displaying energy consumption (900), comprising:
a reception module (901) configured to receive a request for displaying the energy consumption, wherein the request for displaying the energy consumption comprises a target period;
a first determination module (902) configured to determine a total power consumption of a vehicle and an individual power consumption of each type of an electrical device of the vehicle within the target period;
a second determination module (903) configured to determine first energy consumption information to be displayed, based on the total power consumption and the individual power consumption, wherein the first energy consumption information comprises at least one of: a mileage of the vehicle within the target period, a first ratio of the individual power consumption of each type of the electrical device to the total power consumption, a vehicle range corresponding to each individual power consumption, a vehicle range corresponding to the total power consumption, a ratio of the total power consumption to the mileage, or a product of the ratio and a preset number of kilometers; and
a display module (904) configured to display the first energy consumption information on a display panel.

9. The apparatus for displaying energy consumption (900) according to claim 8, further comprising a first processing module configured to:
determine a second reference power consumption corresponding to each type of the electrical device within the target period, according to a first reference power consumption corresponding to each type of the electrical device within a unit duration;
determine second energy consumption information to be displayed based on the second reference power consumption corresponding to each type of the electrical device and the individual power consumption, wherein the second energy consumption information comprises at least one of: a reference range corresponding to each second reference power consumption, or a magnitude relationship between the vehicle range corresponding to the individual power consumption of each type of the electrical device and the reference range; and
display the second energy consumption information on the display panel.

10. The apparatus for displaying energy consumption (900) according to claim 9, wherein the first processing module is further configured to:
obtain current environmental data of the vehicle; and
determine the first reference power consumption corresponding to each type of the electrical device within the unit duration based on the environmental data.

11. The apparatus for displaying energy consumption (900) according to claim 9, the display module (904) being further configured to:
display a first control on the display panel in a case where a vehicle range corresponding to the individual power consumption of at least one type of the electrical device is greater than the reference range; and
display an optimal control strategy corresponding to the at least one electrical device on the display panel in a case where the first control is selected;
optionally, the apparatus for displaying energy consumption (900) further comprising a control module configured to:
display a second control corresponding to each optimal control strategy on the display panel; and
perform, in a case where a second control is selected, optimal control on an associated electrical device based on an optimal control strategy associated with the second control;
optionally, the display module (904) being further configured to:
display a third control corresponding to each optimal control strategy on the display panel; and
display, in a case where a third control is selected, an optimization operation interface corresponding to an optimal control strategy associated with the third control.

12. The apparatus for displaying energy consumption (900) according to any one of claims 8 to 11, further comprising a second processing module configured to:
display, in a case where the vehicle comprises a plurality of electrical devices of the same type, a fourth control corresponding to the same type on the display panel;
determine a first power consumption corresponding to each electrical device among the plurality of electrical devices of the same type in a case where the fourth control is selected;
determine third energy consumption information to be displayed based on the total power consumption and the first power consumption, wherein the third energy consumption information comprises at least one of: a vehicle range corresponding to each first power consumption, or a second ratio of each first power consumption to the total power consumption; and
display the third energy consumption information on the display panel.

13. A vehicle (1000), comprising:
one or more processors (1051); and
a memory (1052) configured to store processor-executable instructions;
wherein the one or more processors (1051) are collectively configured to execute the processor-executable instructions to implement the steps of the method according to any one of claims 1 to 7.

14. A non-transitory computer-readable storage medium storing a computer program, wherein the computer program, when executed by one or more processors of a processing device, causes the processing device to implement the method for displaying energy consumption according to any one of claims 1 to 7.

15. A computer program product, comprising a computer program, wherein the computer program, when executed by one or more processors of a processing device, causes the processing device to implement the method for displaying energy consumption according to any one of claims 1 to 7.

## Amended claims

### Amended claims in accordance with Rule 137(2) EPC.

1. A method for displaying energy consumption, comprising:
receiving (101; 301; 601) a request for displaying the energy consumption triggered by a user, wherein the request for displaying the energy consumption comprises a target period;
determining (102; 302; 602) a total power consumption of a vehicle and an individual power consumption of each type of an electrical device of the vehicle within the target period;
determining (103; 303; 603) first energy consumption information to be displayed, based on the total power consumption and the individual power consumption, wherein the first energy consumption information comprises at least one of: a mileage of the vehicle within the target period, a first ratio of the individual power consumption of each type of the electrical device to the total power consumption, a vehicle range corresponding to each individual power consumption, a vehicle range corresponding to the total power consumption, a ratio of the total power consumption to the mileage, or a product of the ratio and a preset number of kilometers; and
displaying (104; 306; 607) the first energy consumption information on a display panel,
wherein the method further comprises:
determining (304) a second reference power consumption corresponding to each type of the electrical device within the target period, according to a first reference power consumption corresponding to each type of the electrical device within a unit duration, wherein the first reference power consumption is a power consumption within a unit duration of the electrical device in an ideal working state;
determining (305) second energy consumption information to be displayed based on the second reference power consumption corresponding to each type of the electrical device and the individual power consumption, wherein the second energy consumption information comprises at least one of: a reference range corresponding to each second reference power consumption, or a magnitude relationship between the vehicle range corresponding to the individual power consumption of each type of the electrical device and the reference range;
displaying (306) the second energy consumption information on the display panel;
displaying a first control on the display panel in a case where a vehicle range corresponding to the individual power consumption of at least one type of the electrical device is greater than the reference range; and
displaying an optimal control strategy corresponding to the at least one electrical device on the display panel in a case where the first control is selected.

2. The method according to claim 1, wherein, before determining (304) the second reference power consumption corresponding to each type of the electrical device within the target period according to the first reference power consumption corresponding to each type of the electrical device within the unit duration, the method further comprises:
obtaining current environmental data of the vehicle; and
determining the first reference power consumption corresponding to each type of the electrical device within the unit duration based on the environmental data.

3. The method according to claim 1, further comprising:
displaying a second control corresponding to each optimal control strategy on the display panel; and
performing, in a case where a second control is selected, optimal control on an associated electrical device based on an optimal control strategy associated with the second control.

4. The method according to claim 1, wherein the method further comprises:
displaying a third control corresponding to each optimal control strategy on the display panel; and
displaying, in a case where a third control is selected, an optimization operation interface corresponding to an optimal control strategy associated with the third control.

5. The method according to any one of claims 1 to 4, further comprising:
displaying, in a case where the vehicle comprises a plurality of electrical devices of the same type, a fourth control corresponding to the same type on the display panel;
determining a first power consumption corresponding to each electrical device among the plurality of electrical devices of the same type in a case where the fourth control is selected;
determining third energy consumption information to be displayed based on the total power consumption and the first power consumption, wherein the third energy consumption information comprises at least one of: a vehicle range corresponding to each first power consumption, or a second ratio of each first power consumption to the total power consumption; and
displaying the third energy consumption information on the display panel.

6. The method according to any one of claims 1 to 5, further comprising:
determining (604) an altitude change value corresponding to the vehicle within each sub-period in the target period;
determining (605) a second power consumption of the vehicle within the target period according to the altitude change value corresponding to each sub-period;
determining (606) fourth energy consumption information to be displayed based on the total power consumption and the second power consumption, wherein the fourth energy consumption information comprises at least one of: a vehicle range corresponding to the second power consumption, or a third ratio of each second power consumption to the total power consumption; and
displaying (607) the fourth energy consumption information on the display panel.

7. The method according to any one of claims 1 to 6, wherein the target period is a period with a specific moment as a start moment or a period corresponding to a start moment to an end moment of a single trip.

8. An apparatus for displaying energy consumption (900), comprising:
a reception module (901) configured to receive a request for displaying the energy consumption triggered by a user, wherein the request for displaying the energy consumption comprises a target period;
a first determination module (902) configured to determine a total power consumption of a vehicle and an individual power consumption of each type of an electrical device of the vehicle within the target period;
a second determination module (903) configured to determine first energy consumption information to be displayed, based on the total power consumption and the individual power consumption, wherein the first energy consumption information comprises at least one of: a mileage of the vehicle within the target period, a first ratio of the individual power consumption of each type of the electrical device to the total power consumption, a vehicle range corresponding to each individual power consumption, a vehicle range corresponding to the total power consumption, a ratio of the total power consumption to the mileage, or a product of the ratio and a preset number of kilometers; and
a display module (904) configured to display the first energy consumption information on a display panel,
wherein the apparatus for displaying energy consumption (900) further comprises:
a first processing module, configured to:
determine a second reference power consumption corresponding to each type of the electrical device within the target period, according to a first reference power consumption corresponding to each type of the electrical device within a unit duration, wherein the first reference power consumption is a power consumption within a unit duration of the electrical device in an ideal working state;
determine second energy consumption information to be displayed based on the second reference power consumption corresponding to each type of the electrical device and the individual power consumption, wherein the second energy consumption information comprises at least one of: a reference range corresponding to each second reference power consumption, or a magnitude relationship between the vehicle range corresponding to the individual power consumption of each type of the electrical device and the reference range; and
display the second energy consumption information on the display panel,
wherein the display module (904) is further configured to:
display a first control on the display panel in a case where a vehicle range corresponding to the individual power consumption of at least one type of the electrical device is greater than the reference range; and
display an optimal control strategy corresponding to the at least one electrical device on the display panel in a case where the first control is selected.

9. The apparatus for displaying energy consumption (900) according to claim 8, wherein the first processing module is further configured to:
obtain current environmental data of the vehicle; and
determine the first reference power consumption corresponding to each type of the electrical device within the unit duration based on the environmental data.

10. The apparatus for displaying energy consumption (900) according to claim 8, the apparatus for displaying energy consumption (900) further comprises:
a control module, configured to:
display a second control corresponding to each optimal control strategy on the display panel; and
perform, in a case where a second control is selected, optimal control on an associated electrical device based on an optimal control strategy associated with the second control.

11. The apparatus for displaying energy consumption (900) according to claim 8, wherein the display module (904) is further configured to:
display a third control corresponding to each optimal control strategy on the display panel; and
display, in a case where a third control is selected, an optimization operation interface corresponding to an optimal control strategy associated with the third control.

12. The apparatus for displaying energy consumption (900) according to any one of claims 8 to 11, further comprising a second processing module configured to:
display, in a case where the vehicle comprises a plurality of electrical devices of the same type, a fourth control corresponding to the same type on the display panel;
determine a first power consumption corresponding to each electrical device among the plurality of electrical devices of the same type in a case where the fourth control is selected;
determine third energy consumption information to be displayed based on the total power consumption and the first power consumption, wherein the third energy consumption information comprises at least one of: a vehicle range corresponding to each first power consumption, or a second ratio of each first power consumption to the total power consumption; and
display the third energy consumption information on the display panel.

13. A vehicle (1000), wherein the vehicle (1000) comprises the apparatus for displaying energy consumption according to any one of claims 8 to 12.

14. A non-transitory computer-readable storage medium storing a computer program, wherein the computer program, when executed by one or more processors of a processing device, causes the processing device to implement the method for displaying energy consumption according to any one of claims 1 to 7.

15. A computer program product, comprising a computer program, wherein the computer program, when executed by one or more processors of a processing device, causes the processing device to implement the method for displaying energy consumption according to any one of claims 1 to 7.
